# EUROPEAN PATENT SPECIFICATION

(11) **EP 3 950 386 B1**
(45) Date of publication and mention of the grant of the patent: **21.02.2024**
(21) Application number: 21184037.6
(22) Date of filing: 06.07.2021
(51) Int. Cl.: B60C 11/00, B60C 11/13

(54) **TIRE**
REIFEN
PNEUMATIQUE

(30) Priority: 05.08.2020 JP 2020133243
(43) Date of publication of application: 09.02.2022
(73) Proprietor: Sumitomo Rubber Industries, Ltd., Kobe-shi, Hyogo-ken (JP)
(72) Inventor: WATANABE, Kenya, Kobe-shi, Hyogo 651-0072 (JP)
(74) Representative: Manitz Finsterwald Patent- und Rechtsanwaltspartnerschaft mbB

(56) References cited:
- EP-A1- 1 630 003
- EP-A1- 3 141 402
- JP-A- 2005 035 404
- JP-A- 2013 184 330
- JP-A- 2015 131 599

## Description

### TECHNICAL FIELD

The present invention relates to a tire.

### BACKGROUND OF THE INVENTION

JP 3213127 B describes that steering stability and fuel efficiency of a tire are improved by forming tread parts into a two-layer structure of a base rubber located inside in a tire radial direction and a cap rubber located outside in the tire radial direction (so-called a cap/base structure) and applying a rubber composition with a small loss tangent tan δ to the base rubber.

A tire in accordance with the preamble of claim 1 is known from EP 3 141 402 A1. Related tires are known from EP 1 630 003 A1, JP 2005 035404 A, JP 2015 131599 A and JP 2013 184330 A.

### SUMMARY OF THE INVENTION

However, there is room for improvement in steering stability on a wet road and grip performance on snow after tire abrasion.

An object of the present invention is to provide a tire having improved steering stability on a wet road and grip performance on snow after abrasion with a good balance.

As a result of intensive studies, the present inventor has found that the above-described problems can be solved by laminating three or more rubber layers in a tread part and setting a complex elastic modulus E* and a loss tangent tan δ of each of the laminated rubber layers to a predetermined relationship, and completed the present invention.

That is, the present invention relates to:
[1] A tire having a tread at least comprising a first rubber layer constituting a tread surface, a second rubber layer adjacent to inside in a tire radial direction of the first rubber layer, and a third rubber layer adjacent to inside in a tire radial direction of the second rubber layer, wherein a complex elastic modulus of the second rubber layer at 30°C is lower than a complex elastic modulus of the first rubber layer at 30°C and a complex elastic modulus of the third rubber layer at 30°C, wherein a tan δ of the second rubber layer at 30°C is higher than a tan δ of the first rubber layer at 30°C and a tan δ of the third rubber layer at 30°C, wherein the tread has land parts extending continuously in a tire circumferential direction and partitioned by a plurality of circumferential grooves, and wherein a deepest part of a groove bottom of any one of the circumferential grooves is formed as to be located inside in the tire radial direction with respect to an outermost part of the second rubber layer in the land part adjacent to the circumferential groove,
[2] The tire of the above [1], wherein a thickness of the third rubber layer is thinner than each thickness of the first rubber layer and the second rubber layer,
[3] The tire of the above [1] or [2], wherein the thickness of the first rubber layer is thinner than the thickness of the second rubber layer,
[4] The tire of any one of the above [1] to [3], wherein the complex elastic modulus of the second rubber layer at 30°C is 7 MPa or more,
[5] The tire of any one of the above [1] to [4], wherein the tan δ of the second rubber layer at 30°C is 0.35 or more,
[6] The tire of any one of the above [1] to [5], wherein a glass transition temperature of the first rubber layer is -35°C or higher,
[7] The tire of any one of the above [1] to [6], wherein a glass transition temperature of the second rubber layer is -40°C or higher,
[8] The tire of any one of the above [1] to [7], wherein an elongation at break of the first rubber layer measured according to JIS K6251 is 600% or more,
[9] The tire of any one of the above [1] to [8], wherein an elongation at break of the second rubber layer measured according to JIS K6251 is 640% or more,
[10] The tire of any one of the above [1] to [9], wherein a modulus of the first rubber layer at 100% stretching is larger than a modulus of the second rubber layer at 100% stretching,
[11] The tire of any one of the above [1] to [10], wherein, immediately below any one of the circumferential grooves, the tire has a recess part recessed inside in the tire radial direction with respect to the outermost part of the second rubber layer in the land part adjacent to the circumferential groove, and wherein a part of the first rubber layer is formed with a predetermined thickness in the recess part of the second rubber layer,
[12] The tire of any one of the above [1] to [11], wherein the deepest part of the groove bottom of any one of the circumferential grooves is formed so as to be located outside in the tire radial direction with respect to an outermost part of the third rubber layer in the land part adjacent to the circumferential groove,
[13] The tire of any one of the above [1] to [12], wherein the land part has a sipe having both ends not opened in the circumferential groove,

According to the present invention, provided is a tire having improved steering stability on a wet road and grip performance on snow after abrasion with a good balance.

### BRIEF DESCRIPTION OF THE DRAWINGS

FIG. 1 is a schematic view of a grounding surface of a tire when a tread is pressed against a flat surface.
FIG. 2 is a schematic view of a grounding surface of a tire when a tread is pressed against a flat surface.
FIG. 3 is an enlarged cross-sectional view showing a part of a tread of a tire according to one embodiment of the present invention.

### DETAILED DESCRIPTION

The tire according to one embodiment of the present invention is a tire having a tread at least comprising a first rubber layer constituting a tread surface, a second rubber layer adjacent to inside in a tire radial direction of the first rubber layer, and a third rubber layer adjacent to inside in a tire radial direction of the second rubber layer, wherein a complex elastic modulus of the second rubber layer at 30°C (30°C E*) is lower than a complex elastic modulus of the first rubber layer at 30°C (30°C E*) and a complex elastic modulus of the third rubber layer at 30°C (30°C E*), wherein a tan δ of the second rubber layer at 30°C (30°C tan δ) is higher than a tan δ of the first rubber layer at 30°C (30°C tan δ) and a tan δ of the third rubber layer at 30°C (30°C tan δ), wherein the tread has land parts extending continuously in a tire circumferential direction and partitioned by a plurality of circumferential grooves, and wherein a deepest part of a groove bottom of any one of the circumferential grooves is formed as to be located inside in the tire radial direction with respect to an outermost part of the second rubber layer in the land part adjacent to the circumferential groove.

Although it not intended to be bound by theory, in the present invention, , the following can be considered as a mechanism by which steering stability on a wet road and grip performance on snow after tire abrasion can be improved with a good balance.

Of the three rubber layers, the second rubber layer has the lowest complex elastic modulus, and therefore, when the second rubber layer becomes an outermost surface of the tread in the tire after abrasion, the land part becomes easily deformed during turning, and a groove width becomes easily opened by an input during turning. Moreover, since the loss tangent tan δ of the second rubber layer, which becomes a main rubber layer of the land part at the time of tire abrasion, is high, a force for gripping a road surface can be improved. Furthermore, it is considered that, since the complex elastic modulus of the third rubber layer is higher than the complex elastic modulus of the second rubber layer, the entire groove bottom of the second rubber layer can be firmly supported during turning, and since the first rubber layer forms a wall surface of a groove part, a sufficient grip performance due to an edge effect in the groove part can be also obtained, and even in a tire after abrasion, steering stability during turning on a wet road surface can be improved.

Moreover, it is considered that, since the second rubber layer has the lowest complex elastic modulus among the three layers, deterioration in steering stability on a wet road and grip performance on snow due to a high block rigidity can be suppressed.

The thickness of the third rubber layer in the tread is preferably thinner than each thickness of the first rubber layer and the second rubber layer.

The thickness of the first rubber layer is preferably thinner than the thickness of the second rubber layer.

The complex elastic modulus of the second rubber layer at 30°C (30°C E*) is preferably 7 MPa or more.

The tan δ of the second rubber layer at 30°C (30°C tan δ) is preferably 0.35 or more.

The glass transition temperature of the first rubber layer is preferably -35°C or higher.

The glass transition temperature of the second rubber layer is preferably -40°C or higher.

The elongation at break of the first rubber layer measured according to JIS K 6251 is preferably 600% or more.

The elongation at break of the second rubber layer measured according to JIS K 6251 is preferably 640% or more.

The modulus of the first rubber layer at 100% stretching is preferably larger than the modulus of the second rubber layer at 100% stretching.

It is preferable that, immediately below any one of the circumferential grooves, the tire has a recess part recessed inside in the tire radial direction with respect to the outermost part of the second rubber layer in the land part adjacent to the circumferential groove, and a part of the rubber layer is formed with a predetermined thickness in the recess part of the second rubber layer.

It is preferable that the deepest part of the groove bottom of any one of the circumferential grooves is formed so as to be located outside in the tire radial direction with respect to the outermost part of the third layer in the land part adjacent to the circumferential groove.

The land part preferably has a sipe having both ends not opened in the circumferential groove.

The tire which is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

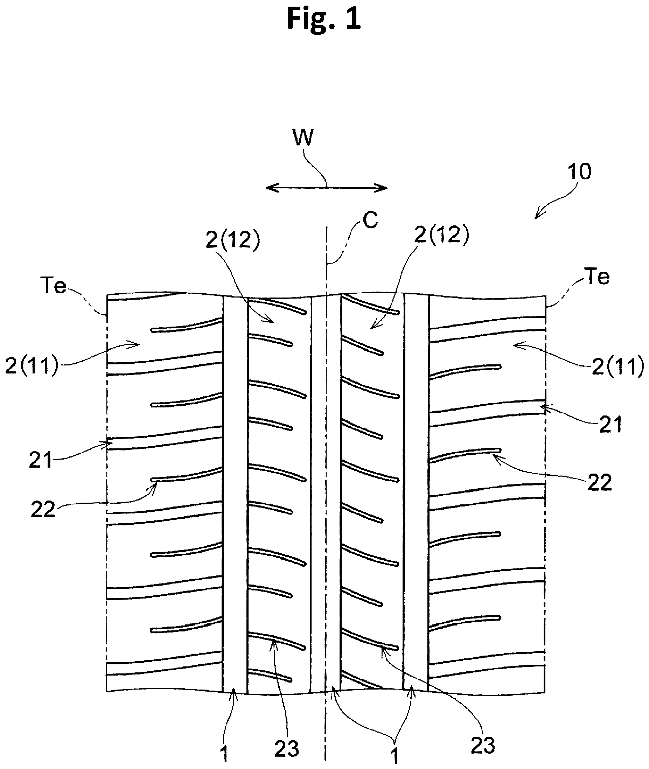

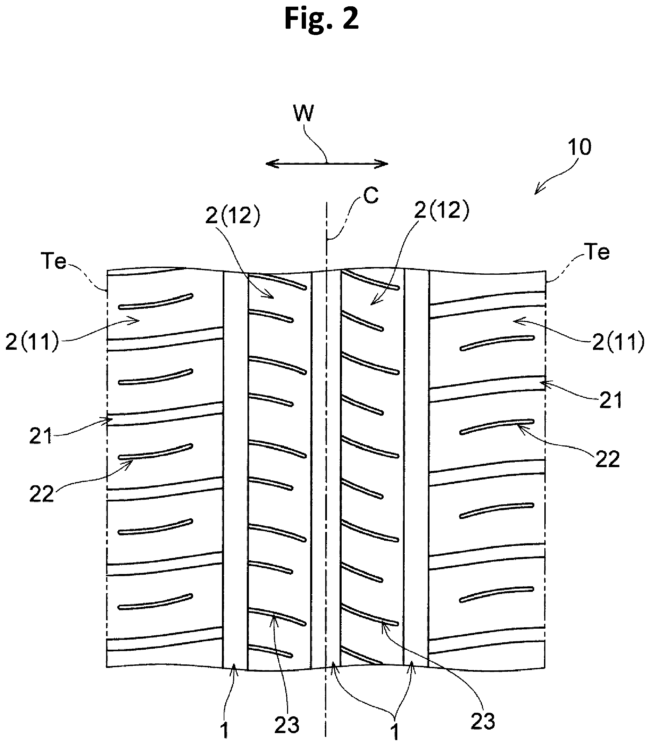

FIGS. 1 and 2 show a schematic view of a grounding surface when a tread is pressed against a flat surface. As shown in FIGS. 1 and 2, a tread 10 constituting the tire according to the present disclosure has a circumferential groove 1 extending continuously in a tire circumferential direction C (in an example of FIG. 1, extending linearly along the tire circumferential direction), a lateral groove 21 and sipes 22 and 23 extending in a width direction.

The tread 10 has a plurality of circumferential grooves 1 extending continuously in the circumferential direction C. In FIGS. 1 and 2, three circumferential grooves 1 are provided, though the number of circumferential grooves is not particularly limited, and may be, for example, two to five. Moreover, in the present invention, although the circumferential groove 1 extends linearly along the circumferential direction, it is not limited to such an embodiment, and may extend in, for example, a wavy shape, a sinusoidal shape, or a zigzag shape along the circumferential direction.

The tread 10 has land parts 2 partitioned by a plurality of circumferential grooves 1 in a tire width direction W. A shoulder land part 11 is a pair of land parts formed between the circumferential groove 1 and a tread end Te. A center land part 12 is a land part formed between a pair of shoulder land parts 11. In FIGS. 1 and 2, two center land parts 12 are provided, though the number of center land parts is not particularly limited, and may be, for example, one to five.

It is preferable that the land part 2 is provided with a lateral groove and/or sipes crossing the land part 2. Moreover, it is more preferable that the land part 2 has a sipe having both ends not opened in the circumferential groove 1. In FIG. 1, the shoulder land part 11 is provided with a plurality of shoulder lateral grooves 21 having a terminal end opened to the circumferential groove 1 and a plurality of shoulder sipes 22 having one end opened to the circumferential groove 1, and the center land part 12 is provided with a plurality of center sipes 23 having one end opened to the circumferential groove 1. In FIG. 2, the shoulder land part 11 is provided with a plurality of shoulder lateral grooves 21 having a terminal end opened to the circumferential groove 1 and a plurality of shoulder sipes 22 having both ends not opened to the circumferential groove 1, and the center land part 12 is provided with a plurality of center sipes 23 having one end opened to the circumferential groove 1.

Besides, in the present specification, a "groove" including the circumferential groove and the lateral groove refers to a recess having a width at least larger than 2.0 mm. On the other hand, in the present specification, a "sipe" refers to a narrow notch having a width of 2.0 mm or less, preferably 0.5 to 2.0 mm.

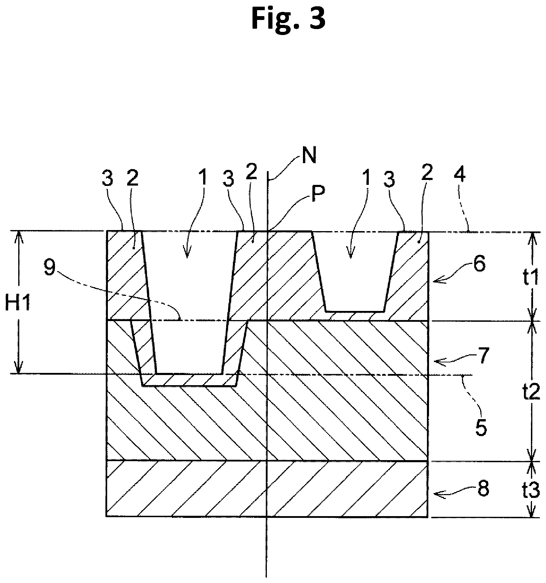

FIG. 3 is an enlarged cross-sectional view showing a part of the tread of the tire. In FIG. 3, a vertical direction is a tire radial direction, a horizontal direction is a tire width direction, and a direction perpendicular to a paper surface is a tire circumferential direction.

As shown in the figure, the tread part of the tire of the present invention comprises a first rubber layer 6, a second rubber layer 7, a third rubber layer 8 (hereinafter, simply referred to as a "first layer 6", a "second layer 7", and a "third layer 8"), and an outer surface of the first layer 6 constitutes a tread surface 3, the second layer 7 is adjacent to inside in a tire radial direction of the first layer 6, and the third layer 8 is adjacent to inside in a tire radial direction of the second layer 7. The first layer 6 typically corresponds to a cap tread. The third layer 8 typically corresponds to a base tread or under tread. Since a typical shape of the second layer 7 has not been determined, the second layer 7 may be a base tread or under tread. Moreover, as long as the object of the present invention is achieved, one or more rubber layers may be further provided between the third layer 8 and a belt layer.

In FIG. 3, a double-headed arrow t1 is a maximum thickness of the first layer 6, a double-headed arrow t2 is a maximum thickness of the second layer 7, and a double-headed arrow t3 is a maximum thickness of the third layer 8. In FIG. 3, any point on a tread surface where a groove is not formed is represented as a symbol P. A straight line represented by a symbol N is a straight line (a normal line) that passes through the point P and is perpendicular to a tangent plane at this point P. In the present specification, the thicknesses t1, t2, and t3 are measured along the normal line N drawn from the point P on the tread surface at a position where a groove does not exist, in the cross section of FIG. 1.

In the present invention, the maximum thickness t1 of the first layer 6 is, but not particularly limited to, preferably 1.0 mm or more, more preferably 1.5 mm or more, further preferably 2.0 mm or more, from the viewpoint of wet grip performance. On the other hand, the maximum thickness t1 of the first layer 6 is preferably 6.0 mm or less, more preferably 5.5 mm or less, further preferably 5.0 mm or less, from the viewpoint of heat generation.

In the present invention, the maximum thickness t2 of the second layer 7 is, but not particularly limited to, preferably 1.0 mm or more, more preferably 2.0 mm or more, further preferably 3.0 mm or more. Moreover, the maximum thickness t2 of the second layer 7 is preferably 10.0 mm or less, more preferably 9.0 mm or less, further preferably 8.0 mm or less.

In the present invention, the maximum thickness t3 of the third layer 8 is, but not particularly limited to, preferably 1.0 mm or more, more preferably 1.5 mm or more, further preferably 2.0 mm or more. Moreover, the maximum thickness t3 of the third layer 8 is preferably 10.0 mm or less, more preferably 9.0 mm or less, further preferably 8.0 mm or less.

A ratio of a thickness of the second layer to a total thickness of the first layer 6, the second layer 7, and the third layer 8 (t2/(t1+t2+t3)) is preferably 0.30 or more, more preferably 0.40 or more, further preferably 0.45 or more, from the viewpoint of effects of the present invention.

The thickness of the first layer 6 is preferably thinner than the thickness of the second layer 7.

The tread has a plurality of circumferential grooves continuously extending in a tire circumferential direction. Although the circumferential groove 1 extends linearly along the circumferential direction, it is not limited to such an embodiment, and may extend in, for example, a wavy shape, a sinusoidal shape, or a zigzag shape along the circumferential direction.

The tread of the present invention has a land part 2 partitioned by a circumferential groove 1 in a tire width direction.

A groove depth H1 of the circumferential groove 1 can be calculated by a distance between an extension line 4 of the land part 2 and an extension line 5 of a deepest part of a groove bottom of the circumferential groove 1. Besides, the groove depth H1 can be, for example, when there are a plurality of circumferential grooves 1, a distance between the extension line 4 of the land part 2 and the extension line 5 of the deepest part of the groove bottom of the circumferential groove 1 (a circumferential groove 1 on the left side in FIG. 3) having the deepest groove depth among the plurality of circumferential grooves 1.

In the present invention, the deepest part of the groove bottom of the circumferential groove 1 (the circumferential groove 1 on the left side in FIG. 3) having the deepest groove depth among the plurality of circumferential grooves 3 is formed so as to be located inside in the tire radial direction with respect to the outermost part of the second layer 7 in the land part 2 adjacent to the circumferential groove. That is, the extension line 5 of the deepest part of the groove bottom of the circumferential groove 1 (the circumferential groove 1 on the left side in FIG. 3) having the deepest groove depth among the plurality of circumferential grooves 3 is located inside in the tire radial direction with respect to an extension line 9 of the outermost part of the second layer 7 in the land part 2 adjacent to the circumferential groove.

In an embodiment of the present invention, immediately below the circumferential groove 1 (the circumferential groove 1 on the left side in FIG. 3) having the deepest groove depth among the plurality of circumferential grooves 3 (inside in the tire radial direction), a recess part recessed inside in the tire radial direction with respect to the outermost part of the second layer 7 in the land part 2 adjacent to the circumferential groove is provided, where a part of the first layer 6 and the second layer 7 with a predetermined thickness is formed in the recess part of the second layer 7. When the first layer 6 and the second layer 7 are formed as described above, a elastic modulus of the first layer 6 remaining around the circumferential groove 1 after tire abrasion is higher than that of the second layer 7, and thus it is considered that the tire becomes easy to function as an edge at the time of turning, and snow traction and the like become improved.

In an embodiment of the present invention, the deepest part of the groove bottom of the circumferential groove 1 (the circumferential groove 1 on the left side in FIG. 3) having the deepest groove depth among the plurality of circumferential grooves 3 is formed so as to be located outside in the tire radial direction with respect to the outermost part of the third layer 8 in the land part 2 adjacent to the circumferential groove. That is, the extension line 5 of the deepest part of the groove bottom of the circumferential groove 1 (the circumferential groove 1 on the left side in FIG. 3) having the deepest groove depth among the plurality of circumferential grooves 3 is located outside in the tire radial direction with respect to an extension line of the outermost part of the third layer 8 in the land part 2 adjacent to the circumferential groove.

In the present invention, it is preferable that the tire of the present invention has a portion where a length in a width direction of at least one land part 2 increases from outside to inside in the tire radial direction, and it is more preferable that the length in the width direction of the land part 2 gradually increases from the outside to the inside in the tire radial direction. Because of such an aspect, a grounding area can be widened along with abrasion due to running, so that the steering stability on a wet road and the wet grip performance on snow can be maintained until the end of running. Besides, a groove wall of the circumferential groove 1 of the present invention may extend linearly from the outside to the inside in the tire radial direction, though the present invention is not limited to such an embodiment, and the groove wall may extend in, for example, a curved shape or a stepped shape.

In the present invention, unless otherwise specified, a dimension and an angle of each member of the tire are measured in a state where the tire is incorporated into a normal rim and is filled with air so as to have a normal internal pressure. At the time of measurement, no load is applied to the tire. Besides, herein, a "normal rim" is a rim defined for each tire in a standard system including standards, on which the tire is based, by the standard, for example, a "standard rim" for JATMA, "Design Rim" for TRA, or "Measuring Rim" for ETRTO. A "normal internal pressure" herein is an air pressure defined for each tire by the standards, i.e., a "maximum air pressure" for JATMA, a maximum value described in Table "TIRE LOAD LIMITS AT VARIOUS COLD INFLATION PRESSURES" for TRA, or "INFLATION PRESSURE" for ETRTO.

"30°C E*" in the present invention refers to a complex elastic modulus E* under a condition of a temperature at 30°C, an initial strain of 10%, a dynamic strain of 1%, and a frequency of 10 Hz. 30°C E* of the first layer 6 is preferably 9 MPa or more, more preferably 10 MPa or more, further preferably 11 MPa or more, from the viewpoint of steering stability. 30°C E* of the second layer 7 is preferably 6 MPa or more, more preferably 7 MPa or more, further preferably 8 MPa or more, from the viewpoint of steering stability. 30°C E* of the third layer 8 is preferably 8 MPa or more, more preferably 9 MPa or more, further preferably 10 MPa or more. 30°C E* of the first layer 6 is preferably 15 MPa or less, more preferably 13 MPa or less, further preferably 12 MPa or less. 30°C E* of the second layer 7 is preferably 11 MPa or less, more preferably 10 MPa or less, further preferably 9 MPa or less. 30°C E* of the third layer 8 is preferably 13 MPa or less, more preferably 12 MPa or less, further preferably 11 MPa or less. In the present invention, 30°C E* of the second layer 7 is lower than 30°C E* of the first layer 6 and 30°C E* of the third layer 8. Moreover, 30°C E* of the third layer 8 is preferably lower than 30°C E* of the first layer 6. Besides, 30°C E* of each rubber layer can be appropriately adjusted depending on types and compounding amounts of the above-described rubber component, filler, softening agent, and the like.

"30°C tan δ" in the present invention refers to a loss tangent tan δ under a condition of a temperature at 30°C, an initial strain of 10%, a dynamic strain of 1%, and a frequency of 10 Hz. 30°C tan δ of the first layer 6 is preferably 0.15 or more, more preferably 0.20 or more, further preferably 0.25 or more, from the viewpoint of wet grip performance. 30°C tan δ of the second layer 7 is preferably 0.30 or more, more preferably 0.35 or more, further preferably 0.38 or more. 30°C tan δ of the third layer 8 is preferably 0.10 or more, more preferably 0.15 or more, further preferably 0.18 or more. On the other hand, each 30°C tan δ of the rubber compositions constituting the first layer 6, the second layer 7, and the third layer 8 is preferably 0.65 or less, more preferably 0.60 or less, further preferably 0.50 or less, from the viewpoint of fuel efficiency. In the present invention, 30°C tan δ of the second layer 7 is higher than 30°C tan δ of the first layer 6 and 30°C tan δ of the third layer 8. Moreover, 30°C tan δ of the first layer 6 is preferably higher than 30°C tan δ of the third layer 8. Besides, 30°C tan δ of each rubber layer can be appropriately adjusted depending on types and compounding amounts of the above-described rubber component, filler, softening agent, and the like.

The elongation at break (EB) in the present invention refers to an elongation at break (elongation at cutting) measured under a condition of a tensile speed of 3.3 mm/sec in an atmosphere of 23°C according to JIS K 6251. The EB of the first layer 6 is preferably 600% or more, more preferably 610% or more, further preferably 620% or more, from the viewpoint of maintaining smoothness of a surface. The EB of the second layer 7 is preferably 640% or more, more preferably 650% or more, further preferably 660% or more. Besides, an upper limit of the EB of the rubber compositions constituting the first layer 6, the second layer 7, and the third layer 8 is not particularly limited.

The modulus at 100% stretching in the present invention is a tension stress at 100% stretching in a columnar direction measured under a condition of a tensile speed of 3.3 mm/sec in an atmosphere of 23°C according to JIS K 6251. The modulus of the first layer 6 at 100% stretching is preferably 1.2 MPa or more, more preferably 1.4 MPa or more, further preferably 1.5 MPa or more, particularly preferably 1.6 MPa or more. The modulus of the second layer 7 at 100% stretching is preferably 0.7 MPa or more, more preferably 0.8 MPa or more, further preferably 0.9 MPa or more, particularly preferably 1.0 MPa or more. Besides, an upper limit of the modulus of the first layer 6, the second layer 7, and the third layer 8 at 100% stretching is not particularly limited. In the present invention, it is preferable that the modulus of the first layer 6 at 100% stretching is larger than that of the second layer 7 at 100% stretching. Besides, in the present specification, a "columnar direction" means a rolling direction at the time of forming a rubber sheet by extrusion or shearing.

The EB of each rubber layer and the modulus at 100% stretching can be appropriately adjusted depending on types and compounding amounts of the above-described rubber component, filler, softening agent, and the like.

A glass transition temperature (Tg) in the present invention refers to a tan δ peak temperature measured by the following method. That is, for a rubber test piece (for example, length 20 mm × width 4 mm × thickness 1 mm) produced by being cut out from inside of a rubber layer of a tread part of each test tire so that a tire circumferential direction is on a long side, a temperature distribution curve of tan δ is measured under a condition of an initial strain of 10%, a dynamic strain of 1%, and a frequency of 10 Hz, using a dynamic viscoelasticity measuring device (for example, EPLEXOR series manufactured by gabo Systemtechnik GmbH), and a temperature corresponding to the largest tan δ value in the obtained temperature distribution curve (tan δ peak temperature) shall be defined as a glass transition temperature (Tg) in the present invention. The Tg of the rubber composition constituting the first layer 6 is preferably -35°C or higher, more preferably -32°C or higher, further preferably -28°C or higher, particularly preferably -24°C or higher, from the viewpoint of wet grip performance. When the Tg of the rubber composition constituting the first layer 6 is -35°C or higher, a loss tangent tan δ in a temperature range higher than Tg tends to become higher compared with the case of lower than -35°C. Moreover, the Tg of the rubber composition constituting the second layer 7 is preferably -40°C or higher, more preferably -37°C or higher, further preferably -35°C or higher, particularly preferably -32°C or higher. Besides, an upper limit of the Tg of the rubber composition constituting the first layer 6, the second layer 7, and the third layer 8 is, but not particularly limited to, preferably -10°C or lower, more preferably -14°C or lower, further preferably -18°C or lower. Besides, the Tg of each rubber layer can be appropriately adjusted depending on types and compounding amounts of the above-described rubber component and the like.

### [Rubber composition]

The tire of the present invention can more effectively suppress deterioration of steering stability on a wet road and grip performance on snow after tire abrasion by cooperation of the structures of the tire described above, particularly the shape of the tread, with the physical property of the rubber composition constituting each layer of the tread.

### <Rubber component>

The rubber composition according to the present invention preferably comprises at least one selected from the group consisting of an isoprene-based rubber, a styrene-butadiene rubber (SBR), and a butadiene rubber (BR) as rubber components. The rubber components constituting the first layer 6 and the second layer 7 preferably comprise a SBR, more preferably comprise a SBR and a BR, further preferably comprise an isoprene-based rubber, a SBR and a BR, and may be rubber components consisting only of an isoprene-based rubber, a SBR and a BR. The rubber component constituting the third layer 8 preferably comprises an isoprene-based rubber, and more preferably comprises an isoprene-based rubber and a BR.

### (Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone or two or more thereof may be used in combination.

The NR is not particularly limited, and those common in the tire industry can be used, examples of which include, for example, SIR20, RSS#3, TSR20, and the like.

When the rubber component comprises the isoprene-based rubber (preferably the natural rubber, more preferably the non-modified natural rubber (NR)), the content thereof in 100% by mass of the rubber component is preferably 50% by mass or less, more preferably 40% by mass or less, further preferably 30% by mass or less, particularly preferably 20% by mass or less, from the viewpoint of wet grip performance. Moreover, a lower limit of the content of the isoprene-based rubber when compounded can be, but not particularly limited to, for example, 1% by mass or more, 3% by mass or more, 5% by mass or more, 10% by mass or more, or 15% by mass or more.

### (SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated additives of these SBRs (hydrogenated SBRs) and the like can also be used.

The SBRs listed above may be used alone or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by ¹H-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content of the SBR (1,2-bond butadiene unit amount) is measured by infrared absorption spectrometry.

A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber component comprises the SBR, the content thereof in 100% by mass of the rubber component is preferably 10% by mass or more, more preferably 20% by mass or more, further preferably 30% by mass or more, particularly preferably 40% by mass or more, from the viewpoint of wet grip performance. Moreover, an upper limit of the content of the SBR in the rubber component is not particularly limited and may be 100% by mass.

### (BR)

The BR is not particularly limited, and those common in the tire industry can be used such as, for example, a BR having a cis content of less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone or two or more thereof may be used in combination.

As a high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95% or more, more preferably 96% or more, further preferably 97% or more, particularly preferably 98% or more. Besides, in the present specification, the cis content (cis-1,4-bond butadiene unit amount) is a value calculated by infrared absorption spectrometry.

As a modified BR, a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber component comprises the BR, the content thereof in 100% by mass of the rubber component is preferably 60% by mass or less, more preferably 50% by mass or less, further preferably 45% by mass or less, particularly preferably 40% by mass or less, from the viewpoint of wet grip performance. Moreover, a lower limit of the content of the BR when compounded can be, but not particularly limited to, for example, 1% by mass or more, 3% by mass or more, 5% by mass or more, 10% by mass or more, or 15% by mass or more.

### (Other rubber components)

As the rubber components according to the present invention, rubber components other than the above-described isoprene-based rubbers, SBRs, and BRs may be compounded. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydride nitrile rubber (HNBR), a butyl rubber (IIR), an ethylene propylene rubber, a polynorbornene rubber, a silicone rubber, a polyethylene chloride rubber, a fluororubber (FKM) , an acrylic rubber (ACM), a hydrin rubber, and the like. These other rubber components may be used alone, or two or more thereof may be used in combination.

### (Filler)

For the rubber composition according to the present invention, a filler comprising carbon black and/or silica is appropriately used. The rubber compositions constituting the first layer 6 and the second layer 7 preferably comprise silica as a filler, and more preferably comprise carbon black and silica. The rubber composition constituting the third layer 8 preferably comprises carbon black as a filler.

### (Carbon black)

The rubber composition according to the present invention preferably comprises carbon black. When the rubber composition comprises carbon black, weather resistance, antistatic property, and rubber strength can be improved. As carbon black, those common in the tire industry can be appropriately used, examples of which include, for example, GPF, FEF, HAF, ISAF, SAF, and the like. These carbon black may be used alone or two or more thereof may be used in combination.

A nitrogen adsorption specific surface area (N₂SA) of carbon black is preferably 10 m²/g or more, more preferably 20 m²/g or more, from the viewpoint of reinforcing property. Moreover, it is preferably 200 m²/g or less, more preferably 150 m²/g or less, further preferably 100 m²/g or less, further preferably 80 m²/g or less, particularly preferably 50 m²/g or less, from the viewpoints of fuel efficiency and processability. Besides, the N₂SA of carbon black is a value measured according to JIS K 6217-2: "Carbon black for rubber industry-Fundamental characteristics-Part 2: Determination of specific surface area-Nitrogen adsorption methods-Single-point procedures".

When the rubber composition comprises the carbon black, the content thereof is, from the viewpoints of abrasion resistance and wet grip performance, preferably 1 part by mass or more, more preferably 3 parts by mass or more, further preferably 5 parts by mass or more based on 100 parts by mass of the rubber component. Moreover, it is preferably 50 parts by mass or less, more preferably 35 parts by mass or less, further preferably 20 parts by mass or less, particularly preferably 10 parts by mass or less, from the viewpoint of fuel efficiency.

### (Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone or two or more thereof may be used in combination.

A nitrogen adsorption specific surface area (N₂SA) of silica is preferably 140 m²/g or more, more preferably 170 m²/g or more, further preferably 200 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica in the present specification is a value measured by a BET method according to ASTM D3037-93.

When the rubber composition comprises the silica, the content thereof is, from the viewpoint of wet grip performance, preferably 40 parts by mass or more, more preferably 50 parts by mass or more, further preferably 60 parts by mass or more, particularly preferably 70 parts by mass or more based on 100 parts by mass of the rubber component. Moreover, it is preferably 130 parts by mass or less, more preferably 120 parts by mass or less, further preferably 110 parts by mass or less, from the viewpoint of abrasion resistance.

A total content of silica and carbon black based on 100 parts by mass of the rubber component is preferably 40 parts by mass or more, more preferably 50 parts by mass or more, further preferably 60 parts by mass or more, particularly preferably 70 parts by mass or more, from the viewpoint of abrasion resistance. Moreover, it is preferably 160 parts by mass or less, more preferably 140 parts by mass or less, further preferably 120 parts by mass or less, from the viewpoints of fuel efficiency and elongation at break.

In the rubber compositions constituting the first layer 6 and the second layer 7, it is preferable that the content of silica based on 100 parts by mass of the rubber component is larger than that of carbon black from the viewpoint of a balance of fuel efficiency, wet grip performance, and abrasion resistance. A ratio of a content of silica to a total content of silica and carbon black in the first layer 2 and the second layer 3 is preferably 60% by mass or more, more preferably 70% by mass or more, further preferably 80% by mass or more, particularly preferably 85% by mass or more. Besides, a ratio of a content of silica to a content of carbon black in the rubber composition constituting the third layer 8 is not particularly limited.

### (Silane coupling agent)

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and/or mercapto-based silane coupling agents are preferable, and mercapto-based silane coupling agents are more preferable. These silane coupling agents may be used alone or two or more thereof may be used in combination.

It is preferable that the mercapto-based silane coupling agent is a compound represented by the following formula (1) and/or a compound comprising a bond unit A represented by the following formula (2) and a bond unit B represented by the following formula (3). 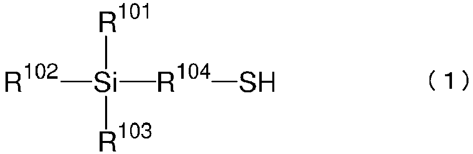 (wherein, R¹⁰¹, R¹⁰², and R¹⁰³ each independently represents a group represented by alkyl having 1 to 12 carbon atoms, alkoxy having 1 to 12 carbon atoms, or -O-(R¹¹¹-O)_{z}-R¹¹² (z R¹¹¹s each independently represents a divalent hydrocarbon group having 1 to 30 carbon atoms; R¹¹² represents alkyl having 1 to 30 carbon atoms, alkenyl having 2 to 30 carbon atoms, aryl having 6 to 30 carbon atoms, or aralkyl having 7 to 30 carbon atoms; and z represents an integer of 1 to 30); and R¹⁰⁴ represents an alkylene having 1 to 6 carbon atoms.) 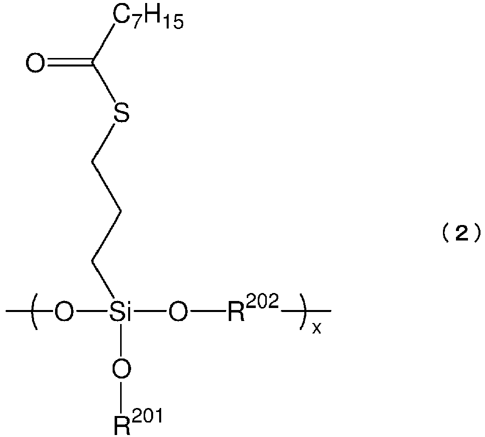 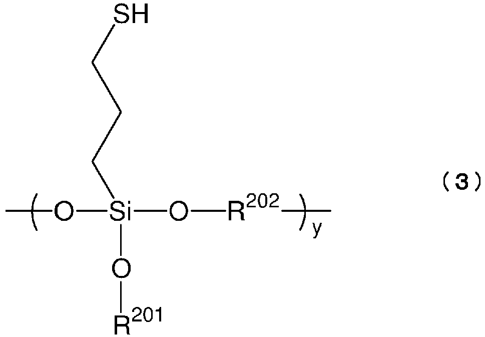 (wherein, x represents an integer of 0 or more; y represents an integer of 1 or more; R²⁰¹ represents alkyl having 1 to 30 carbon atoms, alkenyl having 2 to 30 carbon atoms, or alkynyl having 2 to 30 carbon atoms, which may be substituted with a hydrogen atom, a halogen atom, hydroxyl, or carboxyl; and R²⁰² represents alkylene having 1 to 30 carbon atoms, alkenylene having 2 to 30 carbon atoms, or alkynylene having 2 to 30 carbon atoms; where R²⁰¹ and R²⁰² may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone or two or more thereof may be used in combination.

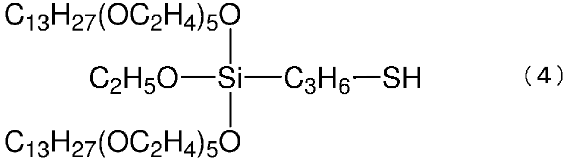

Examples of the compound comprising the bond unit A represented by the formula (2) and the bond unit B represented by the formula (3) include, for example, those manufactured and sold by Momentive Performance Materials, etc. They may be used alone or two or more thereof may be used in combination.

A total content of the silane coupling agents when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 12 parts by mass or less, further preferably 10 parts by mass or less, particularly preferably 9.0 parts by mass or less, from the viewpoint of preventing deterioration of abrasion resistance.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

As a filler, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone or two or more thereof may be used in combination.

### <Softening agent>

The rubber composition according to the present invention preferably comprises a softening agent. Examples of the softening agent include, for example, a resin component, oil, a liquid rubber, an ester-based plasticizer, and the like.

The resin component is not particularly limited, examples of which include a petroleum resin, a terpene-based resin, a rosin-based resin, a phenol-based resin, and the like, which are commonly used in the tire industry. These resin components may be used alone or two or more thereof may be used in combination.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As a C5-based petroleum resin, a dicyclopentadiene resin (DCPD resin) is appropriately used.

In the present specification, the "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a cumarone indene resin, a cumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As an aromatic vinyl-based resin, for example, those commercially available from Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As a C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and dipentene, an aromatic-modified terpene resin made from the terpene compound and an aromatic compound, a terpene phenol resin made from a terpene compound and a phenol-based compound, and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present specification can be defined as a temperature at which a sphere drops when the softening point specified in JIS K 6220-1: 2001 is measured with a ring and ball softening point measuring device.

When the rubber composition comprises the resin component, the content thereof is, from the viewpoint of wet grip performance, preferably 1 part by mass or more, more preferably 3 parts by mass or more, further preferably 5 parts by mass or more based on 100 parts by mass of the rubber component. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic (PCA) compound can also be used. Examples of the low PCA content process oil include a mild extraction solution (MES), a treated distillate aromatic extract (TDAE), a naphthenic oil, and the like.

When the rubber composition comprises the oil, the content thereof is, from the viewpoint of processability, preferably 5 parts by mass or more, more preferably 10 parts by mass or more, further preferably 15 parts by mass or more based on 100 parts by mass of the rubber component. Moreover, it is preferably 120 parts by mass or less, more preferably 100 parts by mass or less, further preferably 90 parts by mass or less, from the viewpoint of abrasion resistance. Besides, in the present specification, the content of oil also includes an amount of oil contained in an oil-extended rubber.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone or two or more thereof may be used in combination.

When the rubber composition comprises the liquid rubber, the content thereof is preferably 1 part by mass or more, more preferably 2 parts by mass or more, further preferably 3 parts by mass or more, particularly preferably 5 parts by mass or more based on 100 parts by mass of the rubber component. Moreover, the content of the liquid rubber is preferably 50 parts by mass or less, more preferably 40 parts by mass or less, further preferably 20 parts by mass or less.

Examples of the ester-based plasticizer include, for example, dibutyl adipate (DBA), diisobutyl adipate (DIBA), dioctyl adipate (DOA), di2-ethylhexyl azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizer may be used alone or two or more thereof may be used in combination.

A content of the softening agent (a total amount of a plurality of softening agents when used in combination) based on 100 parts by mass of the rubber component is preferably 5 parts by mass or more, more preferably 10 parts by mass or more, further preferably 15 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

### (Other compounding agents)

The rubber composition according to the present invention can appropriately comprise compounding agents conventionally and generally used in the tire industry, for example, wax, processing aid, an antioxidant, stearic acid, zinc oxide, a vulcanizing agent, a vulcanization accelerator, and the like, in addition to the above-described components.

When the rubber composition comprises the wax, the content thereof is, from the viewpoint of weather resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone or two or more thereof may be used in combination. As processing aid, for example, those commercially available from Schill+Seilacher GmbH, Performance Additives, etc. can be used.

When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.

Examples of antioxidant include, but not particularly limited to, for example, each amine-based, quinoline-based, quinone-based, phenol-based, and imidazole-based compound, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone or two or more thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

When the rubber composition comprises the stearic acid, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of vulcanization rate.

When the rubber composition comprises the zinc oxide, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

When the rubber composition comprises the sulfur as a vulcanizing agent, the content thereof is, from the viewpoint of securing a sufficient vulcanization reaction, preferably 0.1 parts by mass or more, more preferably 0.3 parts by mass or more, further preferably 0.5 parts by mass or more based on 100 parts by mass of the rubber component. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-comprising sulfur is used as the vulcanizing agent shall be a total content of pure sulfur comprised in the oil-comprising sulfur.

Examples of vulcanizing agents other than sulfur include, for example, alkylphenol/ sulfur chloride condensate, 1,6-hexamethylene-sodium dithiosulfate/dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is, preferably 1 part by mass or more, more preferably 2 parts by mass or more based on 100 parts by mass of the rubber component. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

Kneading conditions include, but not particularly limited to, for example, in the base kneading step, a method of kneading at a discharge temperature of 150 to 170°C for 3 to 10 minutes, and in the final kneading step, a method of kneading at 70 to 110°C for 1 to 5 minutes. Examples of vulcanization conditions include, but not particularly limited to, for example, a method of vulcanizing at 150 to 200°C for 10 to 30 minutes.

### [Tire]

The tire according to the present invention comprises a tread comprising a first layer 6, a second layer 7, and a third layer 8, and may be a pneumatic tire or a non-pneumatic tire. Moreover, it is appropriate for a racing tire, a tire for a passenger car, a tire for a large passenger car, a tire for a large SUV, or a tire for a motorcycle, and can be used as a summer tire, a winter tire, or a studless tire thereof.

The tire comprising a tread comprising a first layer 6, a second layer 7, and a third layer 8 can be manufactured by a usual method using the above-described rubber composition. That is, the tire can be manufactured by extruding unvulcanized rubber compositions, obtained by compounding each of the above-described components based on the rubber component as necessary, into shapes of the first layer 6, the second layer 7, and the third layer 8 with an extruder equipped with a mouthpiece having a predetermined shape, attaching them together with other tire members on a tire forming machine, and molding them by a usual method, forming an unvulcanized tire, followed by heating and pressurizing this unvulcanized tire in a vulcanizing machine.

### EXAMPLE

Although the present invention will be described based on Examples, it is not limited to Examples.

Various chemicals used in Examples and Comparative examples are collectively shown below.
NR: TSR20
SBR: Tufdene 4850 manufactured by Asahi Kasei Corporation (unmodified S-SBR, styrene content: 40% by mass, vinyl content: 46 mol%, Mw: 350,000, comprising 50 parts by mass of an oil content based on 100 parts by mass of a rubber solid content)
BR: Ubepol BR (Registered Trademark) 150B manufactured by Ube Industries, Ltd. (cis content: 97%, Mw: 440,000)
Carbon black: Show Black N330 manufactured by Cabot Japan K.K. (N₂SA: 75 m²/g)
Silica: Ultrasil VN3 (N₂SA: 175 m²/g) manufactured by Evonik Degussa GmbH
Silane coupling agent: NXT-Z45 manufactured by Momentive Performance Materials (mercapto-based silane coupling agent)
Resin component: Petrotack 100V manufactured by Tosoh Corporation (C5-C9-based petroleum resin, softening point: 96°C)
Liquid rubber: Ricon 100 manufactured by Cray Valley (liquid BR)
Oil: VivaTec 500 manufactured by H8vR Group (TDAE oil)
Antioxidant: Antigen 6C manufactured by Sumitomo Chemical Co., Ltd. (N-(1,3-dimethylbutyl)-N'-phenyl-p-phenylenediamine)
Wax: SUNNOC N manufactured by Ouchi Shinko Chemical Industry Co., Ltd.
Stearic acid: Stearic acid "CAMELLIA" manufactured by NOF CORPORATION
Zinc oxide: Zinc oxide No. 2 manufactured by Mitsui Mining 8v Smelting Co., Ltd.
Sulfur: Powdered sulfur manufactured by Karuizawa Sulfur Co, Ltd.
Vulcanization accelerator: Nocceler CZ manufactured by Ouchi Shinko Chemical Industry Co., Ltd. (N-cyclohexyl-2-benzothiazolylsulfenamide)

### (Examples and Comparative examples)

According to the compounding formulations shown in Tables 1 and 2, using a 1.7 L closed Banbury mixer, all chemicals other than sulfur and vulcanization accelerators were kneaded until a discharge temperature at 150°C to 160°C for 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was molded into each shape of the first layer, the second layer and the third layer of the tread, and attached together with other tire members, preparing an unvulcanized tire, followed by vulcanized at 170°C to obtain each test tire shown in Table 3 (size: 195/65R15, rim: 15 × 6.0J, internal pressure: 230 kPa).

### <Measurement of loss tangent tan δ, complex elastic modulus E*, and glass transition temperature (Tg)>

For each rubber test piece produced by being cut out with length 20 mm × width 4 mm × thickness 1 mm from inside of a rubber layer of a tread part of each test tire so that a tire circumferential direction is on a long side, using EPLEXOR series manufactured by gabo Systemtechnik GmbH, a loss tangent tan δ and a complex elastic modulus E* were measured under a condition of a temperature at 30°C, an initial strain of 10%, a dynamic strain of 1%, and a frequency of 10 Hz. Moreover, a temperature distribution curve of the loss tangent tan δ was measured under a condition of an initial strain 10%, a dynamic strain 1%, and a frequency 10 Hz, and a temperature corresponding to the largest tan δ value in the obtained temperature distribution curve (tan δ peak temperature) was defined as a glass transition temperature (Tg). Besides, a thickness direction of a sample was defined as a tire radial direction.

### <Tensile test>

A dumbbell-shaped No. 7 test piece with a thickness of 1 mm, which was cut out from inside of the rubber layer of the tread part of each test tire so that a tire circumferential direction became a tensile direction, was prepared, and according to JIS K 6251: 2017 "Rubber, vulcanized or thermoplastics-Determination of tensile stress-strain properties", a tensile test was conducted under a condition of a tensile speed of 3.3 mm/sec in an atmosphere of 23°C to measure an elongation at break (%) and a modulus (MPa) at 100% stretching. Besides, a thickness direction of a sample was defined as a tire radial direction.

### <Fuel efficiency>

Using a rolling resistance tester, a rolling resistance when each test tire at the time of the tire being a new article was run under a condition of a rim of 15 × 6.0J, an internal pressure of 230 kPa, a load of 4.24 kN, and a speed at 80 km/h was measured, and the inverse value was indicated as an index as Comparative example 1 being 100. The results show that the larger the numerical value is, the smaller the rolling resistance is, and the more excellent the fuel efficiency is.

### <Steering stability on wet road after abrasion>

Each test tire at the time of the tire being a new article and each test tire after abrasion were mounted on four wheels of an FF passenger vehicle with a displacement of 2000 cc, respectively, and actual vehicle running was performed on a test course with a wet asphalt road surface. Handling characteristics was evaluated based on each feeling of running straight, changing lanes, and accelerating/decelerating when running by a test driver at 120 km/h. The evaluations were performed using an integer value of 1 to 10 points, and based on evaluation criteria that the higher the score is, the more excellent the handling characteristics is, a total score of 10 test drivers was calculated. A total score of a control tire (Comparative example 1) at the time of the tire being a new article was converted into a reference value (100), and the evaluation result after abrasion for each test tire was indicated as an index in proportion to the total score.

Besides, each test tire after abrasion was produced by wearing away a tread part along a tread radius so that the depth of the deepest main groove of the new tire is 50% of that at the time of the tire being a new article, and then thermally deteriorating this tire at 80°C for 7 days (the same shall apply hereinafter).

### <Grip performance on snow after abrasion>

Each test tire at the time of the tire being a new article and each test tire after abrasion were mounted on four wheels of an FF passenger vehicle with a displacement of 2000 cc, respectively, and a braking distance from a point where a brake was applied at a speed of 15 km/h on an ice road surface was measured. Regarding an inverse value of a braking distance, the evaluation result after abrasion of each test tire was indicated as an index as a braking distance at the time of the control tire (Comparative example 1) being a new article being 100.

**Table 1**

| | | Compounding for first layer | | | | | | | Compounding for second layer | | | | | |
|---|---|---|---|---|---|---|---|---|---|---|---|---|---|---|
| | | A1 | A2 | A3 | A4 | A5 | A6 | A7 | B1 | B2 | B3 | B4 | B5 | B6 |
| Compounding amount (part by mass) | | | | | | | | | | | | | | |
| | NR | 20 | 20 | 20 | 20 | 20 | 20 | 20 | 20 | 20 | 20 | 20 | 20 | 20 |
| | SBR | 40 | 40 | 40 | 40 | 40 | 40 | 40 | 40 | 40 | 30 | 40 | 30 | 30 |
| | BR | 40 | 40 | 40 | 40 | 40 | 40 | 40 | 40 | 40 | 50 | 40 | 50 | 50 |
| | Carbon black | 10 | 10 | 10 | 10 | 10 | 10 | 10 | 10 | 10 | 10 | 10 | 10 | 10 |
| | Silica 1 | 100 | 100 | 100 | 100 | 100 | 100 | - | 100 | 100 | 120 | 100 | 120 | 120 |
| | Silica 2 | - | - | - | - | - | - | 100 | - | - | - | - | - | - |
| | Silane coupling agent | 8.0 | 8.0 | 8.0 | 8.0 | 8.0 | 8.0 | 8.0 | 8.0 | 8.0 | 9.6 | 8.0 | 9.6 | 9.6 |
| | Resin component | 25 | 10 | 10 | 10 | - | 10 | 10 | 10 | 25 | 15 | - | 20 | 15 |
| | Liquid rubber | 10 | 10 | 10 | 10 | 10 | 10 | 10 | 10 | 10 | 10 | 10 | 10 | 10 |
| | Oil | 10 | 35 | 20 | 30 | 35 | 5 | 15 | 35 | 10 | 45 | 45 | 35 | 60 |
| | Antioxidant | 2.0 | 2.0 | 2.0 | 2.0 | 2.0 | 2.0 | 2.0 | 2.0 | 2.0 | 2.0 | 2.0 | 2.0 | 2.0 |
| | Wax | 2.0 | 2.0 | 2.0 | 2.0 | 2.0 | 2.0 | 2.0 | 2.0 | 2.0 | 2.0 | 2.0 | 2.0 | 2.0 |
| | Stearic acid | 2.0 | 2.0 | 2.0 | 2.0 | 2.0 | 2.0 | 2.0 | 2.0 | 2.0 | 2.0 | 2.0 | 2.0 | 2.0 |
| | Zinc oxide | 3.0 | 3.0 | 3.0 | 3.0 | 3.0 | 3.0 | 3.0 | 3.0 | 3.0 | 3.0 | 3.0 | 3.0 | 3.0 |
| | Sulfur | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator | 2.2 | 2.2 | 2.2 | 2.2 | 2.2 | 2.2 | 2.2 | 2.2 | 2.2 | 2.2 | 2.2 | 2.2 | 2.2 |

| Physical property | | | | | | | | | | | | | | |
|---|---|---|---|---|---|---|---|---|---|---|---|---|---|---|
| | 30°C E* (MPa) | 12 | 8 | 12 | 10 | 11 | 15 | 12 | 8 | 12 | 8 | 8 | 9 | 6 |
| | 30°C tan δ | 0.40 | 0.30 | 0.30 | 0.30 | 0.20 | 0.30 | 0.30 | 0.30 | 0.40 | 0.40 | 0.20 | 0.45 | 0.35 |
| | Tg (°C) | -20 | -25 | -25 | -22 | -30 | -20 | -22 | -25 | -20 | -35 | -30 | -28 | -32 |
| | EB (%) | 690 | 690 | 640 | 670 | 630 | 610 | 610 | 700 | 680 | 680 | 680 | 670 | 720 |
| | 100% modulus (MPa) | 1.5 | 1.2 | 1.6 | 1.5 | 1.6 | 1.8 | 1.8 | 1.2 | 1.5 | 1.3 | 1.1 | 1.4 | 0.9 |

**Table 2**

| | | Compounding for third layer | | | | | |
|---|---|---|---|---|---|---|---|
| | | C1 | C2 | C3 | C4 | C5 | C6 |
| Compounding amount (part by mass) | | | | | | | |
| | NR | 20 | 20 | 20 | 20 | 20 | 20 |
| | SBR | 40 | 40 | 40 | 40 | 40 | 40 |
| | BR | 40 | 40 | 40 | 40 | 40 | 40 |
| | Carbon black | 10 | 10 | 10 | 10 | 10 | 10 |
| | Silica 1 | 80 | 80 | 80 | 70 | 80 | 80 |
| | Silane coupling agent | 6.4 | 6.4 | 6.4 | 5.6 | 6.4 | 6.4 |
| | Resin component | - | - | 10 | - | 10 | 100 |
| | Oil | 25 | 50 | 15 | 15 | 15 | 15 |
| | Antioxidant | 2.0 | 2.0 | 2.0 | 2.0 | 2.0 | 2.0 |
| | Wax | 2.0 | 2.0 | 2.0 | 2.0 | 2.0 | 2.0 |
| | Stearic acid | 2.0 | 2.0 | 2.0 | 2.0 | 2.0 | 2.0 |
| | Zinc oxide | 3.0 | 3.0 | 3.0 | 3.0 | 3.0 | 3.0 |
| | Sulfur | 1.5 | 1.5 | 1.5 | 1.5 | 1.5 | 1.5 |
| | Vulcanization accelerator | 2.2 | 2.2 | 2.2 | 2.2 | 2.2 | 2.2 |

| Physical property | | | | | | | |
|---|---|---|---|---|---|---|---|
| | 30°C E* (MPa) | 11 | 6 | 11 | 11 | 9 | 8 |
| | 30°C tan δ | 0.20 | 0.20 | 0.30 | 0.10 | 0.30 | 0.2 |

**Table 3**

| | | Comparative example | | | Example | | | | | | | | |
|---|---|---|---|---|---|---|---|---|---|---|---|---|---|
| | | 1 | 2 | 3 | 1 | 2 | 3 | 4 | 5 | 6 | 7 | 8 | 9 |
| Compounding for first layer | | B6 | A1 | A2 | A5 | A5 | A5 | A5 | A5 | A6 | A6 | A4 | A4 |
| Compounding for second layer | | A5 | B6 | B5 | B6 | B6 | B6 | B1 | B3 | B3 | B5 | B5 | B5 |
| Compounding for third layer | | C1 | C1 | C1 | C1 | C1 | C1 | C1 | C1 | C1 | C1 | C1 | C1 |

| 30°C E* (MPa) | | | | | | | | | | | | | |
|---|---|---|---|---|---|---|---|---|---|---|---|---|---|
| First layer | | 6 | 12 | 8 | 11 | 11 | 11 | 11 | 11 | 15 | 15 | 10 | 10 |
| Second layer | | 11 | 6 | 9 | 6 | 6 | 6 | 8 | 8 | 8 | 9 | 9 | 9 |
| Third layer | | 11 | 11 | 11 | 11 | 11 | 11 | 11 | 11 | 11 | 11 | 11 | 11 |

| 30°C tan δ | | | | | | | | | | | | | |
|---|---|---|---|---|---|---|---|---|---|---|---|---|---|
| First layer | | 0.35 | 0.40 | 0.30 | 0.20 | 0.20 | 0.20 | 0.20 | 0.20 | 0.30 | 0.30 | 0.30 | 0.30 |
| Second layer | | 0.20 | 0.35 | 0.45 | 0.35 | 0.35 | 0.35 | 0.30 | 0.40 | 0.40 | 0.45 | 0.45 | 0.45 |
| Third layer | | 0.20 | 0.20 | 0.20 | 0.20 | 0.20 | 0.20 | 0.20 | 0.20 | 0.20 | 0.20 | 0.20 | 0.20 |

| Tg (°C) | | | | | | | | | | | | | |
|---|---|---|---|---|---|---|---|---|---|---|---|---|---|
| First layer | | -32 | -20 | -25 | -30 | -30 | -30 | -30 | -30 | -20 | -20 | -22 | -22 |
| Second layer | | -30 | -32 | -28 | -32 | -32 | -32 | -25 | -35 | -35 | -28 | -28 | -28 |

| EB (%) | | | | | | | | | | | | | |
|---|---|---|---|---|---|---|---|---|---|---|---|---|---|
| First layer | | 720 | 690 | 690 | 630 | 630 | 630 | 630 | 630 | 610 | 610 | 670 | 670 |
| Second layer | | 630 | 720 | 670 | 720 | 720 | 720 | 700 | 680 | 680 | 670 | 670 | 670 |

| 100% modulus (MPa) | | | | | | | | | | | | | |
|---|---|---|---|---|---|---|---|---|---|---|---|---|---|
| First layer | | 0.9 | 1.5 | 1.2 | 1.6 | 1.6 | 1.6 | 1.6 | 1.6 | 1.8 | 1.8 | 1.5 | 1.5 |
| Second layer | | 1.6 | 0.9 | 1.4 | 0.9 | 0.9 | 0.9 | 1.2 | 1.3 | 1.3 | 1.4 | 1.4 | 1.4 |
| t1 (mm) | | 5 | 5 | 5 | 5 | 5 | 3 | 3 | 3 | 3 | 3 | 3 | 3 |
| t2 (mm) | | 2 | 2 | 2 | 2 | 3 | 5 | 5 | 5 | 5 | 5 | 5 | 5 |
| t3 (mm) | | 3 | 3 | 3 | 3 | 2 | 2 | 2 | 2 | 2 | 2 | 2 | 2 |
| H1 (mm) | | 5 | 5 | 5 | 5 | 5 | 5 | 5 | 5 | 5 | 5 | 5 | 5 |
| Tread pattern | | Fig. 1 | Fig. 1 | Fig. 1 | Fig. 1 | Fig. 1 | Fig. 1 | Fig. 1 | Fig. 1 | Fig. 1 | Fig. 1 | Fig. 1 | Fig. 2 |

| | | Comparative example | | | Example | | | | | | | | |
|---|---|---|---|---|---|---|---|---|---|---|---|---|---|
| | | 1 | 2 | 3 | 1 | 2 | 3 | 4 | 5 | 6 | 7 | 8 | 9 |
| Index | | | | | | | | | | | | | |
| | Steering stability on wet road after abrasion | 90 | 95 | 100 | 112 | 115 | 118 | 122 | 125 | 128 | 130 | 132 | 135 |
| | Grip performance on snow after abrasion | 90 | 100 | 95 | 110 | 114 | 120 | 117 | 118 | 120 | 122 | 125 | 130 |

From the results of Tables 1 to 3, it can be seen that the tires of the present invention in which three or more rubber layers are laminated on the tread part and the complex elastic modulus E* and the loss tangent tan δ of the laminated rubber layers have a predetermined relationship have improved overall performance of steering stability on a wet road and grip performance on snow after tire abrasion (an average value of indexes of steering stability on a wet road after abrasion and indexes of grip performance on snow after abrasion).

### EXPLANATION OF NUMERALS

1. Circumferential groove
2. Land part
3. Tread surface
4. Extension line of land part
5. Extension line of deepest part of groove bottom of circumferential groove
6. First layer
7. Second layer
8. Third layer
9. Outermost extension line of second layer
10. Tread
11. Shoulder land part
12. Center land part
21. Shoulder lateral groove
22. Shoulder sipe
23. Center sipe

## Claims

1. A tire having a tread (10) at least comprising a first rubber layer (6) constituting a tread surface (3), a second rubber layer (7) adjacent to inside in a tire radial direction of the first rubber layer (6), and a third rubber layer (8) adjacent to inside in a tire radial direction of the second rubber layer (7),
wherein a tan δ of the second rubber layer (7) at 30°C is higher than a tan δ of the first rubber layer (6) at 30°C and a tan δ of the third rubber layer (8) at 30°C,
wherein the tread (10) has land parts (2) extending continuously in a tire circumferential direction and partitioned by a plurality of circumferential grooves (1), and
wherein a deepest part of a groove bottom of any one of the circumferential grooves (1) is formed as to be located inside in the tire radial direction with respect to an outermost part of the second rubber layer (7) in the land part (2) adjacent to the circumferential groove (1)
**characterized in that**
a complex elastic modulus (E*) of the second rubber layer (7) at 30°C is lower than a complex elastic modulus (E*) of the first rubber layer (6) at 30°C and a complex elastic modulus (E*) of the third rubber layer (8) at 30°C, wherein tan δ and complex elastic modulus (E*) are measured under a condition of a temperature at 30°C, an initial strain of 10%, a dynamic strain of 1%, and a frequency of 10 Hz.

2. The tire of claim 1, wherein a thickness of the third rubber layer (8) is thinner than each thickness of the first rubber layer (6) and the second rubber layer (7).

3. The tire of claim 1 or 2, wherein the thickness of the first rubber layer (6) is thinner than the thickness of the second rubber layer (7).

4. The tire of any one of claims 1 to 3, wherein the complex elastic modulus (E*) of the second layer (7) at 30°C is 7 MPa or more.

5. The tire of any one of claims 1 to 4, wherein the tan δ of the second rubber layer (7) at 30°C is 0.35 or more.

6. The tire of any one of claims 1 to 5, wherein a glass transition temperature of the first rubber layer (6) is -35°C or higher.

7. The tire of any one of claims 1 to 6, wherein a glass transition temperature of the second rubber layer (7) is -40°C or higher.

8. The tire of any one of claims 1 to 7, wherein an elongation at break of the first rubber layer (6) measured according to JIS K 6251 is 600% or more.

9. The tire of any one of claims 1 to 8, wherein an elongation at break of the second rubber layer (7) measured according to JIS K 6251 is 640% or more.

10. The tire of any one of claims 1 to 9, wherein a modulus of the first rubber layer (6) at 100% stretching is larger than that of the second rubber layer (7) at 100% stretching.

11. The tire of any one of claims 1 to 10, wherein, immediately below any one of the circumferential grooves (1), the tire has a recess part recessed inside in the tire radial direction with respect to the outermost part of the second rubber layer (7) in the land part (2) adjacent to the circumferential groove (1), and wherein a part of the first rubber layer (6) is formed with a predetermined thickness in the recess part of the second rubber layer (7).

12. The tire of any one of claims 1 to 11, wherein the deepest part of the groove bottom of any one of the circumferential grooves (1) is formed so as to be located outside in the tire radial direction with respect to an outermost part of the third rubber layer (8) in the land part (2) adjacent to the circumferential groove (1).

13. The tire of any one of claims 1 to 12, wherein the land part (2) has sipes having both ends not opened in the circumferential groove (1).

## Patentansprüche

1. Reifen mit einer Lauffläche (10), die mindestens eine erste Gummischicht (6), die eine Laufflächenoberfläche (3) bildet, eine zweite Gummischicht (7) benachbart zu einer Innenseite in einer Reifenradialrichtung der ersten Gummischicht (6) und eine dritte Gummischicht (8) benachbart zu einer Innenseite in einer Reifenradialrichtung der zweiten Gummischicht (7) umfasst
wobei ein tan δ der zweiten Gummischicht (7) bei 30°C höher ist als ein tan δ der ersten Gummischicht (6) bei 30°C und ein tan δ der dritten Gummischicht (8) bei 30°C,
wobei die Lauffläche (10) Landteile (2) aufweist, die sich kontinuierlich in einer Reifenumfangsrichtung erstrecken und durch eine Vielzahl von Umfangsrillen (1) unterteilt sind, und
wobei ein tiefster Teil eines Rillengrunds irgendeiner der Umfangsrillen (1) so ausgebildet ist, dass er in der Reifenradialrichtung in Bezug auf einen äußersten Teil der zweiten Gummischicht (7) in dem Landteil (2) benachbart zu der Umfangsrille (1) innen liegt,
**dadurch gekennzeichnet, dass**
ein komplexer Elastizitätsmodul (E*) der zweiten Gummischicht (7) bei 30°C niedriger ist als ein komplexer Elastizitätsmodul (E*) der ersten Gummischicht (6) bei 30°C und ein komplexer Elastizitätsmodul (E*) der dritten Gummischicht (8) bei 30°C, wobei tan δ und der komplexe Elastizitätsmodul (E*) unter einer Bedingung einer Temperatur von 30°C, einer anfänglichen Dehnung von 10%, einer dynamischen Dehnung von 1% und einer Frequenz von 10 Hz gemessen sind.

2. Reifen nach Anspruch 1, wobei eine Dicke der dritten Gummischicht (8) dünner ist als jede Dicke der ersten Gummischicht (6) und der zweiten Gummischicht (7).

3. Reifen nach Anspruch 1 oder 2, wobei die Dicke der ersten Gummischicht (6) dünner ist als die Dicke der zweiten Gummischicht (7).

4. Reifen nach einem der Ansprüche 1 bis 3, wobei der komplexe Elastizitätsmodul (E*) der zweiten Schicht (7) bei 30°C 7 MPa oder mehr beträgt.

5. Reifen nach einem der Ansprüche 1 bis 4, wobei der tan δ der zweiten Gummischicht (7) bei 30°C 0,35 oder mehr beträgt.

6. Reifen nach einem der Ansprüche 1 bis 5, wobei die Glasübergangstemperatur der ersten Gummischicht (6) -35°C oder höher ist.

7. Reifen nach einem der Ansprüche 1 bis 6, wobei die Glasübergangstemperatur der zweiten Gummischicht (7) -40°C oder höher ist.

8. Reifen nach einem der Ansprüche 1 bis 7, wobei eine Bruchdehnung der ersten Gummischicht (6), gemessen nach JIS K 6251, 600% oder mehr beträgt.

9. Reifen nach einem der Ansprüche 1 bis 8, wobei die Bruchdehnung der zweiten Gummischicht (7), gemessen nach JIS K 6251, 640 % oder mehr beträgt.

10. Reifen nach einem der Ansprüche 1 bis 9, wobei ein Modul der ersten Gummischicht (6) bei 100 % Dehnung größer ist als der der zweiten Gummischicht (7) bei 100 % Dehnung.

11. Reifen nach einem der Ansprüche 1 bis 10, wobei der Reifen unmittelbar unterhalb einer der Umfangsrillen (1) einen Aussparungsteil aufweist, der in der Reifenradialrichtung in Bezug auf den äußersten Teil der zweiten Gummischicht (7) in dem Landteil (2) benachbart zu der Umfangsrille (1) ausgespart ist, und wobei ein Teil der ersten Gummischicht (6) mit einer vorbestimmten Dicke in dem Aussparungsteil der zweiten Gummischicht (7) ausgebildet ist.

12. Reifen nach einem der Ansprüche 1 bis 11, wobei der tiefste Teil des Rillengrunds jeder der Umfangsrillen (1) so ausgebildet ist, dass er in der Reifenradialrichtung in Bezug auf einen äußersten Teil der dritten Gummischicht (8) in dem Landteil (2) benachbart zu der Umfangsrille (1) außen liegt.

13. Reifen nach einem der Ansprüche 1 bis 12, wobei der Landteil (2) Feinschnitte aufweist, deren beide Enden nicht in der Umfangsrille (1) geöffnet sind.

## Revendications

1. Pneumatique ayant une bande de roulement (2) comprenant au moins une première couche de caoutchouc (6) constituant une surface de bande de roulement (3), une deuxième couche de caoutchouc (7) adjacente à une partie intérieure dans une direction radiale du pneumatique de la première couche de caoutchouc (6), et une troisième couche de caoutchouc (8) adjacente à une partie intérieure dans une direction radiale du pneumatique de la deuxième couche de caoutchouc (7),
dans lequel une valeur tan δ de la deuxième couche de caoutchouc (7) à 30 °C est plus élevée qu'une valeur tan δ de la première couche de caoutchouc (6) à 30 °C et qu'une valeur tan δ de la troisième couche de caoutchouc (8) à 30 °C,
dans lequel la bande de roulement (10) a des parties en relief (2) s'étendant en continu dans une direction circonférentielle du pneumatique et cloisonnées par une pluralité de rainures circonférentielles (1), et
dans lequel une partie la plus profonde d'un fond de rainure de l'une quelconque des rainures circonférentielles (1) est formée de manière à être située à l'intérieur dans la direction radiale du pneumatique par rapport à une partie la plus à l'extérieur de la deuxième couche de caoutchouc (7) dans la partie en relief (2) adjacente à la rainure circonférentielle (1),
**caractérisé en ce que**
un module d'élasticité complexe (E*) de la deuxième couche de caoutchouc (7) à 30 °C est inférieur à un module d'élasticité complexe (E*) de la première couche de caoutchouc (6) à 30 °C et à un module d'élasticité complexe (E*) de la troisième couche de caoutchouc (8) à 30 °C, dans lequel une valeur tan δ et un module d'élasticité complexe (E*) sont mesurés sous une condition d'une température à 30 °C, d'une contrainte initiale de 10 %, d'une contrainte dynamique de 1 %, et d'une fréquence de 10 Hz.

2. Pneumatique selon la revendication 1, dans lequel une épaisseur de la troisième couche de caoutchouc (8) est plus mince que chaque épaisseur de la première couche de caoutchouc (6) et de la deuxième couche de caoutchouc (7).

3. Pneumatique selon la revendication 1 ou 2, dans lequel l'épaisseur de la première couche de caoutchouc (6) est plus mince que l'épaisseur de la deuxième couche de caoutchouc (7).

4. Pneumatique selon l'une quelconque des revendications 1 à 3, dans lequel le module d'élasticité complexe (E*) de la deuxième couche de caoutchouc (7) à 30 °C est de 7 MPa ou plus.

5. Pneumatique selon l'une quelconque des revendications 1 à 4, dans lequel la valeur tan δ de la deuxième couche de caoutchouc (7) à 30 °C est de 0,35 ou plus.

6. Pneumatique selon l'une quelconque des revendications 1 à 5, dans lequel une température de transition vitreuse est de -35 °C ou supérieure.

7. Pneumatique selon l'une quelconque des revendications 1 à 6, dans lequel une température de transition vitreuse de la deuxième couche de caoutchouc (7) est de -40 °C ou supérieure.

8. Pneumatique selon l'une quelconque des revendications 1 à 7, dans lequel un allongement à la rupture de la première couche de caoutchouc (6) mesuré selon la norme industrielle japonaise JIS K 6251 est de 600 % ou plus.

9. Pneumatique selon l'une quelconque des revendications 1 à 8, dans lequel un allongement à la rupture de la deuxième couche de caoutchouc (7) mesuré selon la norme industrielle japonaise JIS K 6251 est de 640 % ou plus.

10. Pneumatique selon l'une quelconque des revendications 1 à 9, dans lequel un module de la première couche de caoutchouc (6) à 100 % d'étirement est supérieur à celui de la deuxième couche de caoutchouc (7) à 100 % d'étirement.

11. Pneumatique selon l'une quelconque des revendications 1 à 10, dans lequel, immédiatement en dessous de l'une quelconque des rainures circonférentielles (1), le pneumatique a une partie d'évidement à l'intérieur dans la direction radiale du pneumatique par rapport à la partie la plus à l'extérieur de la deuxième couche de caoutchouc (7) dans la partie en relief (2) adjacente à la rainure circonférentielle (1), et dans lequel une partie de la première couche de caoutchouc (6) est formée avec une épaisseur prédéterminée dans la partie d'évidement de la deuxième couche de caoutchouc (7).

12. Pneumatique selon l'une quelconque des revendications 1 à 11, dans lequel la partie la plus profonde du fond de rainure de l'une quelconque des rainures circonférentielles (1) est formée de manière à être située à l'extérieur dans la direction radiale du pneumatique par rapport à une partie la plus à l'extérieur de la troisième couche de caoutchouc (8) dans la partie en relief (2) adjacente à la rainure circonférentielle (1).

13. Pneumatique selon l'une quelconque des revendications 1 à 12, dans lequel la partie en relief (2) a des fentes ayant les deux extrémités qui ne sont pas ouvertes dans la rainure circonférentielle (1).
